# EUROPEAN PATENT SPECIFICATION

(11) **EP 1 417 915 B1**
(45) Date of publication and mention of the grant of the patent: **04.04.2007**
(21) Application number: 03025257.1
(22) Date of filing: 06.11.2003
(51) Int. Cl.: A47J 37/06, H05B 3/00, H05B 6/68

(54) **A device for heating foodstuff**
Gerät zum Erwärmen von Nahrungsmitteln
Dispositif pour le réchauffage d'aliments

(30) Priority: 08.11.2002 IT MI20022373
(43) Date of publication of application: 12.05.2004
(73) Proprietor: Campo, Antonino, 21028 Travedona Monate (Varese) (IT)
(72) Inventor: Campo, Antonino, 21028 Travedona Monate (Varese) (IT)
(74) Representative: Baroni, Matteo

(56) References cited:
- GB-A- 2 326 954
- US-A- 3 941 044
- US-A- 4 645 909
- US-A- 5 147 068
- US-A- 5 504 311
- US-A- 5 805 769

## Description

The present invention relates to a device for heating foodstuffs, as well as to a control method applying to said device.

As is known, having a hot meal available in short times is often important under various circumstances; let us think for instance of all those public places where a large number of customers has to eat products such as sandwiches, toasts, small pizzas, brioches and the like (schools, highway restaurants, station restaurants and so on).

Meeting the customers' needs and keeping a high productivity rate therefore strongly affect the time needed for preparing the various food products (either solid food or drinks), and above all the time needed for getting hot food ready.

Generally, known devices for warming up food can be divided into two classes: the first class includes all ovens, small ovens, toasters and similar appliances exploiting heating elements operating with electric resistance or gas, whereas the second class includes ovens with endogenous heat generation, also known as microwave ovens.

The two classes of devices mentioned above, however, have each series of faults, which make them little suitable for an efficient use in situations involving large numbers of customers as previously referred to. As a matter of fact, if we consider electric or gas ovens, it should be pointed out that they require quite long operating times for warming up a dish (typically some minutes); this obviously leads to negative consequences in all those situations in which many customers have to be served in short times.

Moreover, for high performances such types of ovens should be constantly kept at a minimum temperature: this results in a high increase of energy costs, thus affecting the operating life of the appliance and its reliability.

On the other hand, also microwave ovens, though they are extremely faster than gas or electric ovens, are not without drawbacks: first of all, it should be pointed out that said devices are highly expensive, and moreover it should be noted that the principle relying on endogenous heating is not at all suitable for warming up basically water-free food products.

Concerning this last point, it should indeed be pointed out that microwaves practically act onto food by stirring water molecules contained therein: therefore, if the microwave bundle permeates a substance relatively rich in water (such as for instance a slice of cheese or of cold meat, it will heat it up or it will even cook it, whereas at the same time it will be much less efficient on a substance with little water (such as for instance a slice of bread); practically, this results in a high limitation of operating flexibility (let us think for instance of the unsatisfactory use of microwave ovens as toasters).

Is is also known from Document US 5805769 a food heating apparatus provided with a ellipsoidal reflectors for light energy emitting lamp used as heating elements within a hoven.

The ellipsoidal reflectors concentrate light reflected from the light energy emitting lamp towards the food to be heated.

Document US 5845769 discloses all the features of the preamble of the present claim 1.

It is also known from document US 5504311 a control device for controlling a heating apparatus in which a drawer receiving a product to be heated has optoelectronic devices to read a distinctive sign on the product.

The control as to duration, intensity and partial distribution of heating are established by the control device as a function of the memorized reference sign mached to the distinctive sign which is read.

Under these circumstances the technical task underlying the present invention is to conceive a device for warming up food products that can basically obviate the aforesaid limitations.

A main aim of the present invention is to conceive a heating device combining a high speed in warming up food or drinks with low managing costs and great operating flexibility.

In the framework of said technical task, an important aim of the invention is to conceive a device having as low energy consumption as possible, which can be advantageously integrated into complex systems such as for instance snack or drink vendors.

Going into further details concerning the preset invention, further technical aims consist in carrying out a heating device that enables as short warming-up times as possible, that does not need to be pre-heated before use (or that does not need to be kept at a minimum operating temperature), and that can be advantageously used also as a toaster.

The technical task and the aims referred to above are basically achieved by a device for warming up food products, having the characteristics of one or more of the appended claims.

The following now contains, by way of merely indicative and non-limiting example, the description of a preferred, though not exclusive, embodiment of a device for warming up food products according to the invention, as shown in the accompanying drawings, in which:
- Figure 1 shows a schematic view of a device for warming up food products according to the present invention;
- Figures 2, 3A and 3B show schematic views of some components of the device of Figure 1;
- Figure 4 shows a perspective view of a prototype according to the invention; and
- Figures 5A and 5B shows a block diagram concerning the possible automatic and manual operation of the device.

With reference to the figures mentioned above, the device according to the invention is globally referred to with number 1.

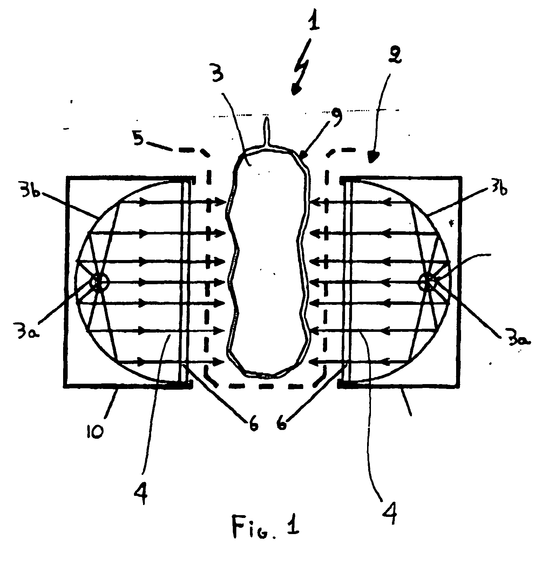

Looking in particular at Figure 1, it basically consists of a. heating assembly 3, which can operatively act onto a food product 3.

According to a particularly advantageous feature of the present invention, said heating assembly 2 comprises heat radiation means, which are mainly designed to emit a heat radiation 4 towards the food product 3. Advantageously, the heat radiation emitted by the heat radiation means can be absorbed by the food product 3, which thus receives a high amount of heat energy by radiation. Thanks to the features of the present invention, the heat radiation 4 conveyed onto the food product 3 has a wavelength range including the whole spectrum of visible light (even though, if needed, a wider or narrower wavelength range can be used, for instance extending up to infrared and/or ultraviolet rays).

In order to ensure the correct wavelength of the radiation spectrum, the heat radiation means include at least a lamp, for instance a halogen lamp 3a, which basically scatters visible light and infrared radiation.

It should now be pointed out that in the framework of the present invention, differently from traditional ovens, the food product is warmed up only by radiation, whereas heating by convection or by stirring water molecules is basically excluded.

In other words, no electric resistances or microwave devices are provided for. Indeed, by exploiting the features of the invention, and in particular the features of the embodiment hereinafter described, far shorter warming-up times than those typical of electric ovens (and similar to those of microwave ovens) can be achieved, without however incurring costs and energy consumption of endogenous heating ovens.

In order to maximize said physical phenomenon, the heat radiation means operatively act along a preferred radiation axis; advantageously, the food product 3 can be positioned on a suitable point of the radiation axis, so as to receive the heat radiation 4 in the best possible conditions.

In the embodiment shown, the radiation means comprise two halogen lamps 3a, which emit their respective heat radiations conveyed by reflecting elements along a preferred radiation axis coinciding in practice with the line joining the two lamps 3a.

In order to maximize the density of incident radiation on the food product 3, the heat radiations singularly emitted by the two lamps 3a are directed along the radiation axis in reciprocally opposite senses, whereas the food product 3 can be preferably positioned in the middle point of said radiation axis (with respect to the halogen lamps 3a).

Still in order to maximize operating efficiency, the radiation means further comprise a given number of conveying bodies, which act onto the heat radiation 4 so as to direct and/or concentrate it along said radiation axis.

Advantageously, said conveying bodies can operated according to conventional optical principles, by acting onto a heat radiation 4, which basically consists of the wide-spectrum light emitted by the halogen lamps 3a.

In further detail, in the non-limiting embodiment here disclosed, note that the conveying bodies consist of reflecting dishes 3b, each of which is associated with a halogen lamp 3a.

Advantageously, each halogen lamp 3a is positioned in the focus of its respective reflecting dish 3b, so that the light/radiation bundle getting out of the dish is basically parallel. In other words, by exploiting the particular arrangement of lamp 3a and dish 3b, a volume basically occupied by an approximately coherent radiation (i.e. whose wave fronts preferably propagate along the same direction) is created within the device 1; obviously, in the case shown, the two radiation bundles coming from the two lamps 3a will have opposite senses but one preferred propagation direction.

The present invention can envisage the presence of a housing body 5 housing the food product 3 in operating condition (or in other words, when the halogen lamps 3a emit their heat radiation 4).

In order to ensure a correct operation of the device 1, the housing body 5 (which can have any shape, depending on the most various kinds of solid or liquid food products it shall contain) can be switched from a loading position, in which it is designed to receive a food product 3, and a heating position, in which it is positioned along the radiation axis, and vice versa. Conveniently, in order to enable the product 3 to absorb the heat radiation, the housing body 5 is at least partially transparent with respect to heat radiation 4; for instance, the housing body 4 can consist of a metal cage, or a container made of Pyrex glass and so on.

In order to prevent the formation of convective currents, and in order to physically separate the food product from the lamps 3a, at least a separating element 6 can be operatively placed between the heat radiation means and the food product 3. In practice, said separating element 6 is preferably made of a transparent material with respect to the heat radiation 4, and it is placed along the radiation axis between the halogen lamp 3a and the food product 3; it should be pointed out that in the embodiment shown, the separating elements 6 cooperate with their respective reflecting element 3b, thus defining a housing cavity designed to house a halogen lamp 3a.

It should then be further pointed out that the device for rapidly warming up food products has an outer box-shaped body 10 designed to house the heat radiation means and their respective conveying bodies.

In particular, the box-shaped body 10 is designed to prevent the access to said elements, also acting as protection element for the latter and enabling the whole appliance to be transported.

Also the housing body 5 designed to house the various food products is housed within the box-shaped body 10, at least in heating position.

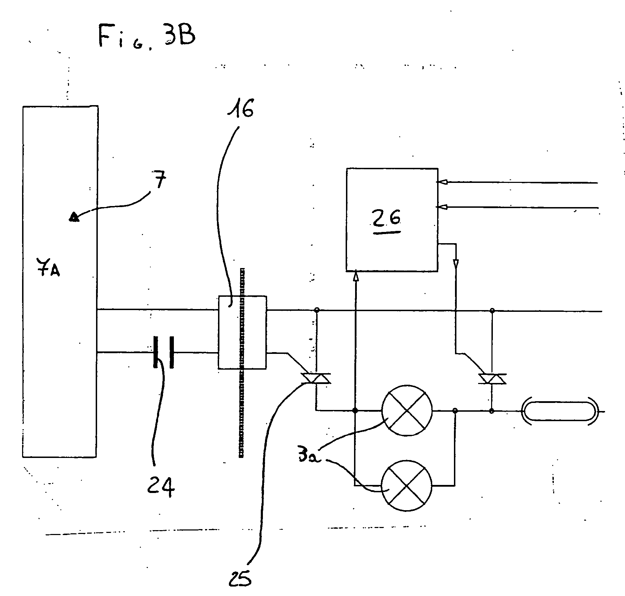

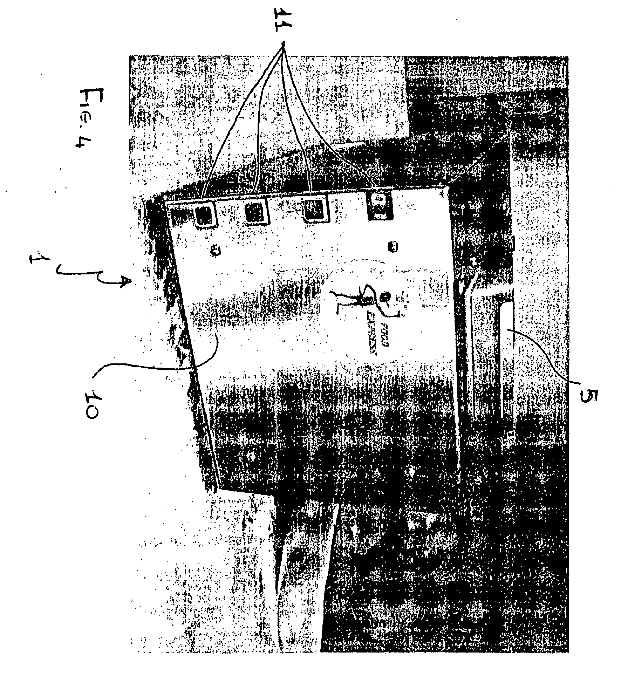

In particular, the housing body 5 is directly connected, particularly by means of hinges, to the box-shaped body 10 so as to be swung between the loading position in which housing compartment for the food product is outside and the heating position in which it is completely within the box-shaped body 10. See in particular Figure 4.

Advantageously, the operation of the device according to the present invention can be suited to an extremely wide range of products, since the warming-up effect obtained by radiation warms up products in short times and the heat radiation 4 reaches almost wholly the food product 3 (also thanks to a suitable choice of the materials and/or structure of the separating elements 6, to the shape of the reflecting element 3b, to the position of the lamp 3a and of the housing body 5). Still advantageously, the operation of the device 1 can be made completely automatic, so as to leave the user only the task to load the dish to be eaten into the convenient housing compartment.

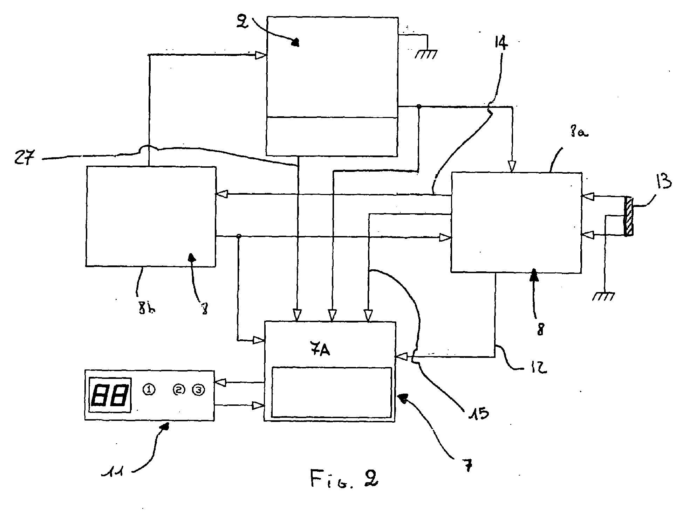

In order to achieve the technical aims just described (see in particular Figure 2), it can be provided for management and control means 7, operatively interlocked at least to the radiation means (or heating assembly 2) and/or to the housing body 5 so as to obtain given operating conditions thereof. More particularly, said management and control means 7 act onto the radiation means so as to obtain for the latter start-up times and/or intensity of supplied energy and/or intensity of radiated energy and/or heat profiles to be associated to given food products, but they can also act onto the housing body 5 so as to obtain its positioning in the loading and/or heating position (for instance by suitable controlling its positioning through motorized systems).

One input/output unit 11 will enable to switch the device on/off and, if necessary, to select the heat profile to be applied to the dish to be warmed up (as shall be better explained below); said input/output unit will also be equipped for instance with a display showing the time required for warming up (for instance in seconds) and, if necessary, other information concerning the optimal operation or possible failures of the whole device.

The correct choice of operating parameters depending on the kind of food product 3 is practically obtained through a logic control unit 7a, functionally and structurally integrated into the management and control means.

Said logic unit 7a has a micro-controller, one or more memories (for instance ROM or EEPROM as needed) circuitally connected to said micro-controller and containing an operating program and/or a plurality of operating profiles to be associated to given food products; there is also a plurality of measuring elements circuitally connected (line 27 in Figure 2) to the micro-controller for detecting all data necessary for controlling the operation of the device 1 (for instance operating times and/or temperatures and/or electric quantities).

In order to ensure the required amount of electric energy, an energy supply assembly 8 is used, which is operatively interlocked to the heat radiation assembly, to the management and control means 7 and, if needed, to the housing body 5 for providing the required supplies.

The energy supply assembly 8 can be connected to an electric network 13 (for instance the usual alternated-current network) and comprises in further detail a supply circuit 8a, which can be connected directly to the electric network (see always Figure 2); advantageously, said assembly sends the 5V direct current supply signal 15 to the logic control unit 7A and can include a synchrony sub-assembly 18, designed to generate a synchrony signal 12 (which can be sent as interrupt signal to the logic control unit, and be used for adjusting the activity of halogen lamps 3a and/or timing functions), and an emergency sub-assembly designed to start operating in case of failures. Eventually, there is an electric power control circuit 8b, connected to the supply circuit 8a from which it receives electric energy, for instance a 220V alternated current signal 14, which provides the supply source to the management and control means 7.

Going into further details, it should be pointed out that in the embodiment shown the micro-controller of the logic control unit 7A comprises one or more chips, which can advantageously be provided (with any integration degree) with the typical elements of a computer structure, such as for instance RAM, ROM, EPROM, EEPROM memories, timers, analogical/digital converters and so on; in particular, there can be an EEPROM memory containing all information required for executing a given "heat profile" on a given food product.

It should be noted that "heat profile" refers to a particular combination of switching on/off of the halogen lamp or lamps 3a, for a given time and with a given current intensity; it is thus possible to advantageously associate the right amount of heat radiation 4 with every food product 3, taking in due consideration the features and size of the substance which the latter is made of.

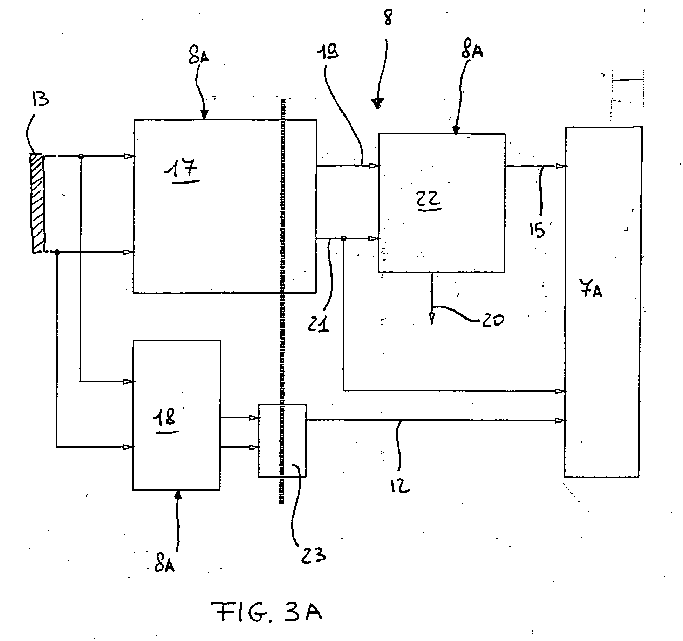

The supply circuit 8a (Figure 3A) is conveniently insulated from the other sensitive elements of the device, as well as from the user, if present, by means of suitable safety systems; in particular, there can be a transformer 17 placed between the electric network 13 and the logic control unit 7A.

In particular, the transformer 17 will be able to allow the conversion from 220VAC, applied to primary winding, to 24VAC on the secondary winding.

In particular, the supply with 24V alternated current referred to with 19 and the ground line 21 will enter a card 22 designed for the generation of the already mentioned 5V direct current supply voltage 15 directed to the logic control unit 7A, which may, if necessary, generate a 24V direct current tension for moving the basket or housing body 5.

It should then be noted that also the synchrony sub-assembly 18 is galvanically insulated by a suitable optical insulator 23 with respect to the synchrony signal 12.

The electric power control circuit 8b, shown in Figure 3B, can control the supply of the halogen lamps 3a by closing a triac 25 as a consequence of a suitable pulse signal coming from the logic control unit 7a.

Said power control circuit includes an emergency device 26 (with independent supply) which switches the whole food-warming device off if an accidental breaking of the primary triac 25 should force an uninterrupted supply of the halogen lamps 3a. Moreover, it should be noted that this kind of intervention does not enable the external user to reset the device in any way and makes it necessary to send the device to a service center for repair.

As a matter of fact, this kind of failure, having a temporally permanent character, would cause an uncontrolled and dangerous rise of temperature within the food-warming device.

Still concerning operating safety, in the embodiment shown, there is a safety element 24 (which in the example shown is a capacitor) placed between the heat radiation means and the logic control unit 7A; said safety element prevents accidental failures of the logic control unit from causing the lamps 3a to switch on in an uncontrolled way.

Eventually, there is an optical insulator 16 operatively placed between the logic control unit 7A and the primary triac 25.

In a particular operating mode of the present device 1, the food products 3 are housed within suitable pre-packaging means 9 (which - in other words - are defined by suitable packages to be associated with a food product 3); said pre-packaging means 9 comprise a protective package designed to house the food product 3 and an identifier (which will be in its turn an electronically readable code associated with the protective package and/or with the food product 3), referring univocally to a given kind of food product 3. Thus, during the automatic operation of the device 1, the logic control unit can exactly detect the loaded product and associate the corresponding "heat profile" thereto by means of suitable and conventional identifying devices (for instance optical readers).

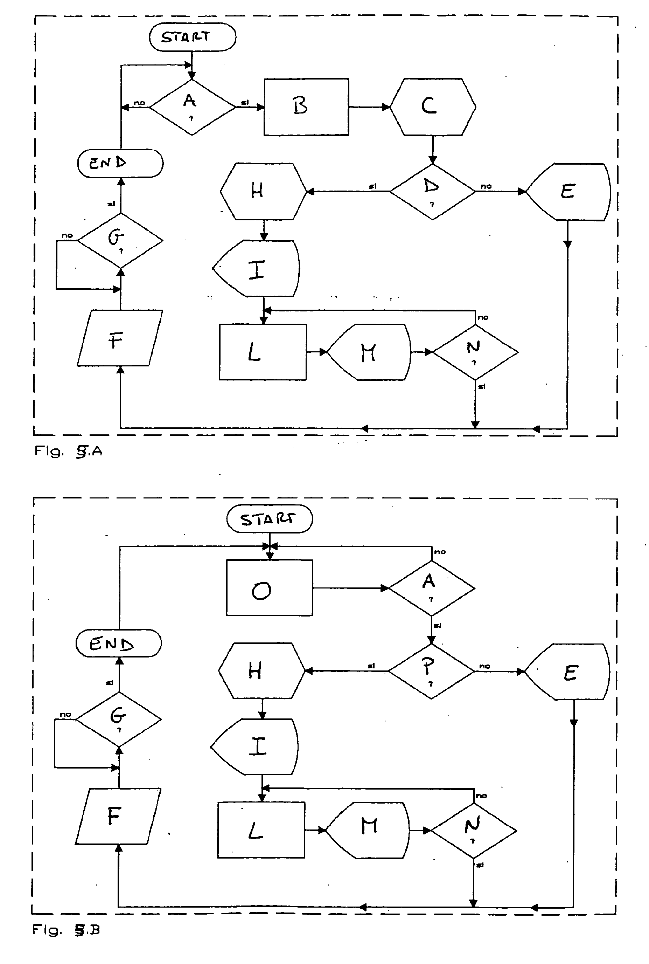

Advantageously, the device according to the present invention can operate according to a peculiar automatic or manual process for warming up food products; the automatic process (Figure 5A) comprises the following steps: first a food product 3 is loaded into the heating assembly 2, thus automatically activating the housing body thanks to the signals generated by the control unit 7a, then the food product 3 is warmed up.

Advantageously, before warming up the product 3, the food-warming device waits for the food product to be loaded in (step A in Figure 5A).

If, conversely, the presence of the food product is detected, the door is automatically shut up (step B).

Then, in step C the identifying device reads the bar code and subsequently decodes the product type. In step D the presence or correctness of the bar code is checked, and if one or both conditions are not met, in step E an error signal is generated, for instance on the display; an acoustic signal can also be emitted and the housing body can be automatically sent out so as to enable the removal of the food product (step F). In step G the device will then check the actual removal of the product and then the process will be ended. If, conversely, in step D a correct bar code is detected, the device will automatically recall the heat profile for the kind of food loaded in (step H) and will show the total waiting time on the display (step I).

Then, a timer will beat waiting time (step L) and remaining time will be displayed (step M); thus, the closed cycle including steps L, M and N will be repeated until in step N warming-up time is exhausted, then emitting an acoustic signal and sending out the housing body together with the ready-to-eat food product in step F.

Then, the step in which the removal of the warmed-up product is checked is repeated (step G).

The manual operation of the device according to the invention is shown in Figure 5B.

Once the device is switched on, the manual selection of the food type loaded in will be requested by means of the associated keyboard and display (step O); the device will then automatically check the loading of a dish (step A), ending the process if the latter is not detected.

If, conversely, the dish has actually been loaded in, in step P the presence of a package thereto associated, designed to ensure a hygienic integrity to the product, will be checked.

Should said package be absent, the process would execute steps E, F and G and then end the program as already described for the automatic procedure.

Conversely, should the presence of said package be detected, steps H, I, L, M and N previously described would be exactly repeated.

It should also be noted that during the normal operations of the device 1, if the food products are protected by pre-packaging means, the separating elements 6 could be superfluous. At the same time, it cannot be denied that, thanks to the features described up to here, the device 1 according to the invention can be advantageously integrated into a vendor of liquid and/or solid food products, such as for instance common automatic vendors; said vendor shall basically include a storing assembly housing within it various types of food products (brioches, small pizzas, toasts and so on), which can be selected by a user and previously warmed up by means of the device 1.

The invention has important advantages.

First of all, it should be pointed out that the peculiar structure of the "operating core" of the invention enables to obtain warming-up times that are far shorter than those of electric or gas ovens, and at the same time is basically free from pre-heating operations; furthermore, the transfer of heat energy carried out in accordance with the present invention is equally effective on any food type (either solid, liquid, humid or dry and so on), so that extremely satisfactory results can be achieved in various applications (food-warming, drink-warming, toasting functions and so on).

It should also be noted that, though achieving a high efficiency and short preparation times, the present device is easy to be carried out and to maintain; thus high purchase and management costs for microwaves installations can be avoided, though keeping their advantageous features.

Secondly, it should be pointed out that thanks to its features, the device according to the invention can be easily integrated into automatic vendors, where it can operate with high efficiency and reliability,but above all in a dedicated way for every product type.

It should also be noted that the optimization of the control of the heat radiation assembly can take into consideration several factors, and can then achieve high standards of energy saving and of management of the wear and tear of heating elements, thus advantageously reducing purchase, management and maintenance costs.

Eventually, it should be noted that the use of the present device enables to warm up the dish with its plastic package, fully complying with hygienic provisions and advantageously not dirtying the inner parts of the device.

Moreover, average consumption is around 1,000 watt referred only to food preparation time, since no pre-heating operation is required.

Last but not least, it should be noted that the particular size of the device as well as its weight enable an easy transport and installation.

## Claims

1. Device for heating foodstuffs, comprising a heating assembly (2) acting operatively onto at least a food product (3) and comprising heat radiation means designed to emit a heat radiation (4) towards said food product (3), the heat radiation means comprising at least a lamp to emit the heat radiation (4) and a given number of conveying bodies acting onto the heat radiation (4) so as to direct it towards the food product (3), **characterized in that** it further comprises management and control means (7) acting on the lamp so as to selectively establish heat profiles depending on the food product to be warmed up, said heat profile being a combination of activations/deactivations of the lamp.

2. Device according to claim 1, **characterized in that** the heat radiation (4) emitted by said heat radiation means and absorbed by the food product (3) has a wavelength range basically comprising the whole spectrum of infrared and/or of visible light.

3. Device according to any of the preceding claims, **characterized in that** the heat radiation means act operatively along a radiation axis, the food product (3) being positioned in any point on said radiation axis.

4. Device according to claim 1, **characterized in that** the heat radiation means comprise one or more halogen lamps (3a), said halogen lamps (3a) emitting respective heat radiations basically directed parallel to their radiation axis and preferably in directions and senses going, in case of more lamps, towards one meeting point, the food product (3) being positioned still more preferably on said meeting point or, in case of two lamps, in the middle point of the common radiation axis.

5. Device according to claim 1, **characterized in that** said conveying bodies comprise a given number of reflecting elements (3b), each reflecting element (3b) being preferably associated with a corresponding halogen lamp (3a).

6. Device according to claim 5, **characterized in that** each reflecting element (3b) has a surface basically shaped as a reflecting dish, at least a halogen lamp (3a) being positioned along the focus of said reflecting dish.

7. Device according to any of the preceding claims, **characterized in that** it further comprise a housing body (5) designed to house the food product (3) in operating conditions, said housing body (5) being switchable from a loading position, in which it is designed to receive a food product (3), and a heating position, in which it is positioned along the radiation axis, and vice versa.

8. Device according to claim 7, **characterized in that** the housing body (5) is made at least partially of a transparent material with respect to heat radiation (4).

9. Device according to any of the preceding claims, **characterized in that** it further comprises at least a separating element (6) operatively placed between the heat radiation means and the food product (3), said separating element being preferably transparent with respect to heat radiation (4).

10. Device according to claim 9, **characterized in that** the separating element (6) is placed along the radiation axis between a halogen lamp (3a) and the food product (3), the separating element (6) being defining together with a corresponding reflecting dish (3b) a housing cavity designed to house a halogen lamp (3a).

11. Device according to any of the previous claims **characterized in that** the management and control means (7) comprise a logic control unit having:
- a micro-controller;
- a memory circuitally connected to said micro-controller and preferably containing an operating program and/or a plurality of operating profiles to be associated to given food products;
- a user interface designed to transfer inputs coming from a user to the micro-controller and/or to the memory; and
- a plurality of measuring elements circuitally connected to the micro-controller for detecting operating times and/or temperatures and/or electric quantities.

12. Device according to any of the preceding claims, **characterized in that** it further comprises an energy supply assembly (8) operatively interlocked to the heat radiation assembly and/or to the management and control means and/or to the housing body (5), said energy supply assembly (8) being preferably connected to an electric network and still more preferably comprising:
- a supply circuit (8a) to be connected to the electric network and preferably comprising a synchrony sub-assembly designed to generate a corresponding synchrony signal, and an emergency sub-assembly;
- an electric power control circuit (8b) connected to said supply circuit (8a) and to the management and control means (7).

13. Device according to any of the preceding claims, **characterized in that** it further comprises a device for identifying pre-packaging means (9) to be associated with a food product (3), said pre-packaging means comprising a protective package designed to house the food product (3) and an identifier, preferably having an electronically readable code, associated with said protective package and/or with the food product (3), each code being readable by the device and referring univocally to a given type of food product (3) and/or heat profile for warming up said product.

14. Device according to claim 7, **characterized in that** it further comprises a box-shaped body (10) containing the heat radiation means and the corresponding conveying bodies, the housing body (5) being designed to house the food product contained within the box-shaped body (10) at least in heating position.

15. Device according to claim 14, **characterized in that** the housing body (5) is directly connected and preferably hinged to the box-shaped body (10).

## Patentansprüche

1. Gerät zum Erwärmen von Nahrungsmitteln, umfassend eine Heizeinheit (2), die an mindestens einem Lebensmittel (3) wirksam aktivierbar ist und Heizstrahlmittel umfasst, die dazu bestimmt sind, eine Wärmestrahlung (4) in Richtung des Lebensmittels (3) abzugeben, wobei die Heizstrahlmittel mindestens eine Lampe zum Aussenden der Wärmestrahlung (4) und eine vorgegebene Anzahl von auf die Wärmestrahlung (4) aktiven Leitungskörper umfasst, um sie in Richtung des Lebensmittels (3) zu richten, **dadurch gekennzeichnet, dass** es überdies Betriebs- und Kontrollmittel (7) umfasst, die auf die Lampe derart wirken, dass wahlweise Wärmeprofile in Abhängigkeit des zu erhitzenden Lebensmittels festgelegt werden, wobei das Wärmeprofil eine Kombination der Aktivierung/Deaktivierung der Lampe ist.

2. Gerät nach Anspruch 1, **dadurch gekennzeichnet, dass** die von den Heizstrahlmitteln abgegebene und vom Lebensmittel (3) aufgenommene Wärmestrahlung (4) einen Wellenlängenbereich aufweist, der im wesentlichen das gesamte Spektrum der Infrarotstrahlen und/oder des sichtbaren Lichtes umfasst.

3. Gerät nach einem beliebigen der vorstehenden Ansprüche, **dadurch gekennzeichnet, dass** die Heizstrahlmittel längs einer Strahlachse wirksam sind, wobei das Lebensmittel (3) an einer beliebigen Stelle der Strahlachse positioniert ist.

4. Gerät nach Anspruch 1, **dadurch gekennzeichnet, dass** die Heizstrahlmittel eine oder mehrere Halogenlampen umfassen (3a), wobei die Halogenlampen (3a) entsprechende Wärmestrahlungen aussenden, die im wesentlichen parallel zur eigenen Strahlachse und bevorzugter Weise in verschiedenen Richtungen und Stromsinnen gerichtet sind, im Fall von mehreren Lampen, in einer einzigen Zusammentreffstelle, wobei das Lebensmittel (3) noch bevorzugter Weise in dieser Zusammentreffstelle oder bei zwei Lampen, an der mittleren Stelle der diesen gemeinsamen Strahlungsachse positioniert ist.

5. Gerät nach Anspruch 1, **dadurch gekennzeichnet, dass** die Leitungskörper eine vorgegebene Anzahl von reflektierenden Elementen (3b) umfassen, wobei jedes reflektierende Element (3b) bevorzugter Weise einer entsprechenden Halogenlampe (3a) zugeordnet ist.

6. Gerät nach Anspruch 5, **dadurch gekennzeichnet, dass** jedes reflektierende Element (3b) eine im wesentlichen parabelförmig ausgebildete Oberfläche aufweist, wobei mindestens eine Halogenlampe (3a) längs des Brennpunktes der Parabel positioniert ist.

7. Gerät nach einem beliebigen der voranstehenden Ansprüche, **dadurch gekennzeichnet**, das es überdies ein Gehäuse (5) umfasst, das dazu bestimmt ist, das Lebensmittel (3) unter Arbeitsbedingungen aufzunehmen, wobei das Gehäuse (5) zwischen einer Ladestellung, in der es ein Lebensmittel (3) aufnimmt, und einer Erhitzungsstelle reversibel verstellbar ist, in der es längs der Strahlungsachse positioniert ist.

8. Gerät nach Anspruch 7, **dadurch gekennzeichnet, dass** das Gehäuse (5) mindestens teilweise aus Material besteht, das für die Wärmestrahlung (4) durchlässig ist.

9. Gerät nach einem beliebigen der vorstehenden Ansprüche, **dadurch gekennzeichnet, dass** es überdies mindestens ein Trennelement (6) umfasst, das zwischen den Heizstrahlmitteln und dem Lebensmittel (3) zwischengeschaltet ist, wobei das Trennelement bevorzugter Weise für die Wärmestrahlung (4) durchlässig ist.

10. Gerät nach Anspruch 9, **dadurch gekennzeichnet, dass** das Trennelement (6) längs der Strahlungsachse zwischen der Halogenlampe (3a) und dem Lebensmittel (3) zwischengeschaltet ist, wobei das Trennelement (6) unter Zusammenwirkung mit einer entsprechenden, reflektierenden Parabel (3b) einen Aufnahmehohlraum festlegt, der dazu bestimmt ist, eine Halogenlampe (3a) aufzunehmen.

11. Gerät nach einem beliebigen der vorstehenden Ansprüche, **dadurch gekennzeichnet, dass** die Betriebs- und Kontrollmittel (7) eine Kontrolllogik umfassen, aufweisend:
- einen Mikrokontroller;
- einen Speicher, der schaltungsmäßig mit dem Mikrokontroller verbunden ist und bevorzugter Weise ein Arbeitsprogramm und/oder eine Vielzahl von Betriebsprofilen enthält, die den vorbestimmten Lebensmitteln zugeordnet werden können;
- eine Verwenderschnittstelle, die dazu bestimmt ist, die von einem Benutzer stammenden Impuls dem Mikrokontroller und/oder dem Speicher zu übertragen; und
- eine Vielzahl von Messelementen, die schaltungsmäßig mit dem Mikrokontroller zur Erfassung der Arbeitszeiten und/oder Temperaturen und/oder elektrischen Größen verbunden ist.

12. Gerät nach einem beliebigen der vorstehenden Ansprüche, **dadurch gekennzeichnet, dass** es überdies eine Energiezuführeinheit (8) umfasst, die mit der Wärmestrahleinheit und/oder mit den Steuer- und Kontrollmitteln und/oder mit dem Gehäuse (5) wirksam verbunden ist, wobei die Energiezuführeinheit (8) bevorzugter Weise mit einem Stromnetz verbunden ist, und noch bevorzugter Weise umfassen:
- eine Speiseschaltung (8a), die mit dem Stromnetz verbindbar ist und bevorzugter Weise eine Synchronieuntergruppe umfasst, die dazu bestimmt ist, ein entsprechendes Synchroniesignal zu erzeugen, und eine Notuntergruppe;
- eine Kontrollschaltung der Stromkraft (8b), die mit der Speiseschaltung (8a) und mit den Steuer- und Kontrollmitteln (7) verbunden ist.

13. Gerät nach einem beliebigen der vorstehenden Ansprüche, **dadurch gekennzeichnet, dass** es überdies eine Vorrichtung zu Erkennung von vorgefertigten Mitteln (9) umfasst, die einem Lebensmittel (3) zugeordnet werden können, wobei die vorgefertigten Mittel eine Schutzpackung umfassen, die dazu bestimmt ist, das Lebensmittel (3) und ein Erkennungselement aufzunehmen, das bevorzugter Weise einen elektronisch lesbaren Kodex aufweist, der der Schutzpackung und/oder dem Lebensmittel (3) zugeordnet ist, wobei jeder Kodex durch die Vorrichtung ablesbar ist und eindeutig mit der vorgegebenen Lebensmittelart (3) und/oder mit dem Wärmeprofil in Bezug gebracht werden kann, das für die Erhitzung dieses Lebensmittels bestimmt ist.

14. Gerät nach Anspruch 7, **dadurch gekennzeichnet, dass** es überdies ein Gehäuse (10) umfasst, das die Wärmestrahlungsmittel und die entsprechenden Leitungskörper enthält, wobei das Gehäuse (5) bereitgestellt ist, um das innerhalb des Gehäuses (10) enthaltene Lebensmittel mindestens in der Erhitzungsstelle aufzunehmen.

15. Gerät nach Anspruch 14, **dadurch gekennzeichnet, dass** das Gehäuse (5) direkt und bevorzugter Weise angelenkt mit dem Gehäuse (10) verbunden ist.

## Revendications

1. Dispositif pour le réchauffage d'aliments, comprenant un groupe de réchauffage agissant de manière opérante sur au moins un produit alimentaire (3) et comprenant des moyens de rayonnement thermique destinés à émettre une radiation thermique (4) vers ledit produit alimentaire (3), les moyens de rayonnement thermique comprenant au moins une lampe pour émettre la radiation thermique (4) et un nombre donné de corps d'acheminement agissant sur la radiation thermique (4) de manière à la diriger vers le produit alimentaire (3), **caractérisé en ce qu'**il comporte en outre des moyens de gestion et de contrôle (7) agissant sur la lampe pour établir sélectivement les profils thermiques en fonction du produit alimentaire qui doit être réchauffé, ledit profil thermique étant une combinaison d'activation/désactivation de la lampe.

2. Dispositif selon la revendication 1, **caractérisé en ce que** la radiation thermique (4) émise par lesdits moyens de rayonnement thermique et absorbée par le produit alimentaire (3) a une plage de longueurs d'onde comprenant sensiblement tout le spectre de l'infrarouge et/ou de la lumière visible.

3. Dispositif selon l'une quelconque des revendications précédentes, **caractérisé en ce que** les moyens de rayonnement thermique agissent de manière opérante le long de l'axe de rayonnement, le produit alimentaire (3) étant positionné à tout point sur ledit axe de rayonnement.

4. Dispositif selon la revendication 1, **caractérisé en ce que** les moyens de rayonnement thermique comportent une ou plusieurs lampes halogènes (3a), lesdites lampes halogènes (3a) émettant des radiations thermiques respectives dirigées essentiellement parallèles à leur axe de rayonnement et de préférence dans des directions et des sens qui, s'il s'agit de plusieurs lampes, vont vers un seul point de rencontre, le produit alimentaire (3) étant positionné d'une façon préférentielle sur ledit point de rencontre, ou bien, s'il s'agit de deux lampes, vont vers le point médian de l'axe de rayonnement commun.

5. Dispositif selon la revendication 1, **caractérisé en ce que** lesdits corps d'acheminement comportent un nombre donné d'éléments réfléchissants (3b), chaque élément réfléchissant (3b) étant de préférence associé à une lampe halogène correspondante (3a).

6. Dispositif selon la revendication 5, **caractérisé en ce que** chaque élément réfléchissant (3b) a une surface ayant sensiblement la forme d'une parabole réfléchissante, au moins une lampe halogène (3a) étant positionnée le long du foyer de ladite parabole réfléchissante.

7. Dispositif selon l'une quelconque des revendications précédentes, **caractérisé en ce qu'**il comporte en outre un corps de logement (5) destiné à loger le produit alimentaire (3) en conditions de fonctionnement, ledit corps de logement (5) pouvant être mû entre une position de chargement, à laquelle il est destiné à recevoir un produit alimentaire (3), et une position de réchauffage à laquelle il est positionné le long de l'axe de rayonnement, et vice versa.

8. Dispositif selon la revendication 7, **caractérisé en ce que** le corps de logement (5) est fabriqué au moins partiellement en une matière transparente à la radiation thermique (4).

9. Dispositif selon l'une quelconque des revendications précédentes, **caractérisé en ce qu'**il comporte en outre au moins un élément de séparation (6) mis de manière opérante entre les moyens de rayonnement thermique et le produit alimentaire (3), ledit élément de séparation étant de préférence transparent à la radiation thermique (4).

10. Dispositif selon la revendication 9, **caractérisé en ce que** l'élément de séparation (6) est mis le long de l'axe de rayonnement entre une lampe halogène (3a) et le produit alimentaire (3), l'élément de séparation (6) définissant, ensemble avec une parabole réfléchissante correspondante (3b), une cavité de logement destinée à recevoir une lampe halogène (3a).

11. Dispositif selon l'une quelconque des revendications précédentes, **caractérisé en ce que** les moyens de gestion et de contrôle (7) comportent une unité logique de contrôle ayant:
- un microcontrôleur;
- une mémoire reliée dans un circuit audit microcontrôleur et de préférence contenant un programme d'exploitation et/ou une pluralité de profils de fonctionnement à associer à des produits alimentaires prédéterminés;
- une interface utilisateur destinée à transférer des entrées en provenance d'un utilisateur au microcontrôleur et/ou à la mémoire; et
- une pluralité d'éléments de mesure reliés dans un circuit au microcontrôleur pour détecter les temps de fonctionnement et/ou les températures et/ou les quantités électriques.

12. Dispositif selon l'une quelconque des revendications précédentes, **caractérisé en ce qu'**il comporte en outre un groupe d'alimentation en énergie (8) assujetti de manière opérante au groupe de rayonnement thermique et/ou aux moyens de gestion et contrôle et/ou au corps de logement (5), ledit groupe d'alimentation en énergie (8) étant de préférence relié à un réseau électrique et d'une façon préférentielle comprenant:
- un circuit d'alimentation (8a) à relier au réseau électrique et comprenant de préférence un sous-groupe de synchronie destiné à engendrer un signal de synchronie correspondant, et un sous-groupe d'urgence;
- un circuit de contrôle du courant électrique (8b) relié audit circuit d'alimentation (8a) et aux moyens de gestion et de contrôle (7).

13. Dispositif selon l'une quelconque des revendications précédentes, **caractérisé en ce qu'**il comporte en outre un dispositif d'identification de moyens de pré-conditionnement (9) à associer à un produit alimentaire (3), lesdits moyens de pré-conditionnement comprenant un empaquetage de protection destiné à recevoir le produit alimentaire (3) et un dispositif d'identification, ayant de préférence un code lisible par voie électronique, associé audit empaquetage de protection et/ou au produit alimentaire (3), chaque code étant lisible par le dispositif et se référant d'une façon univoque à un type prédéterminé de produit alimentaire (3) et/ou à un profil thermique pour réchauffer ledit produit.

14. Dispositif selon la revendication 7, **caractérisé en ce qu'**il comporte en outre un corps en forme de boîtier (10) contenant les moyens de rayonnement thermique et les corps d'acheminement correspondants, le corps de logement (5) étant destiné à loger le produit alimentaire contenu dans le corps en forme de boîtier (10) au moins en position de réchauffage.

15. Dispositif selon la revendication 14, **caractérisé en ce que** le corps de logement (5) est relié directement au corps en forme de boîtier (10), et de préférence articulé sur ce dernier.
